# EUROPÄISCHE PATENTANMELDUNG

(11) **EP 0 915 040 A1**
(43) Veröffentlichungstag der Anmeldung: **12.05.1999**
(21) Anmeldenummer: 98120957.0
(22) Anmeldetag: 05.11.1998
(51) Int. Cl.: B65G 59/02

(54) **Verfahren und Vorrichtung zum automatischen Handhaben von Paletten**

(30) Priorität: 07.11.1997 DE 19749193
(71) Anmelder: LTG Holding GmbH, 70435 Stuttgart (DE)
(72) Erfinder: Gericke, Stephan Dipl.-Ing., 73760 Ostfildern (DE); Mokler, Bernhard Dipl.-Ing., 71706 Markgröningen (DE); Vollmann, Andreas Dipl.-Ing., 71640 Ludwigsburg (DE)
(74) Vertreter: Gleiss & Grosse

(57) **Zusammenfassung**

Die Erfindung betrifft ein Verfahren und eine Vorrichtung zum automatischen Handhaben von Paletten (5), die der Aufnahme von gestapelten, flächenförmigen Gütern, insbesondere Blechtafeln (45), dienen, wobei -in einem Normalbetriebszustand- das jeweils oberste Gut vom Stapel entnommen und einem Weiterverarbeitungsprozeß, insbesondere einem Druck- oder Lackierprozeß, zugeführt wird und eine Palettenanhebung im Normalbetriebszustand derart erfolgt, daß sich das jeweils oberste Gut innerhalb eines definierten Höhenniveaubereichs befindet, und wobei -in einem Handhabungsbetriebszustand- ein auf der Palette (5) befindlicher Reststapel der Güter dem Weiterverarbeitungsprozeß zugeführt und anschließend die nach Abarbeiten des Reststapels leere Palette (47) aus ihrer Entnahmeposition (51) entfernt wird. Die Erfindung zeichnet sich dadurch aus, daß während des Handhabungsbetriebszustands durch vertikales Verfahren der Palette (5) eine Reststapelanhebung innerhalb des Höhenniveaubereichs durchgeführt wird, und daß anschließend die leere Palette (47) durch vertikales und horizontales Verfahren zu einem Ablageort (7) transportiert oder transportiert und dort abgesetzt wird.

## Beschreibung

Die Erfindung betrifft ein Verfahren zum automatischen Handhaben von Paletten, die der Aufnahme von gestapelten, flächenförmigen Gütern, insbesondere Blechtafeln, dienen, wobei -in einem Normalbetriebszustand- das jeweils oberste Gut vom Stapel entnommen und einem Weiterverarbeitungsprozeß, insbesondere einem Druck- oder Lackierprozeß, zugeführt wird und eine Palettenanhebung im Normalbetriebszustand derart erfolgt, daß sich das jeweils oberste Gut innerhalb eines definierten Höhenniveaubereichs befindet, und wobei -in einem Handhabungsbetriebszustand- ein auf der Palette befindlicher Reststapel der Güter dem Weiterverarbeitungsprozeß zugeführt und anschließend die nach Abarbeiten des Reststapels leere Palette aus ihrer Entnahmeposition entfernt wird.

Ein Verfahren der eingangs genannten Art ist bekannt. Bei diesem wird -in einem Normalbetriebszustand- ein sich auf einer Palette befindlicher Blechstapel angehoben, damit sich die jeweils oberste Blechtafel innerhalb eines definierten Höhenniveaubereichs befindet, so daß die jeweils oberste Blechtafel optimal einem Weiterverarbeitungsprozeß, insbesondere von einem Anleger einer Druck- oder Lackierlinie dem Druck- oder Lackierprozeß, zugeführt werden kann. Befindet sich auf der Palette nur noch ein Reststapel (beispielsweise 50 bis 100 Blechtafeln), so fährt ein Portal in Richtung des Anlegers, so daß dessen Portalgabel unter die den Reststapel tragende Palette gelangt. Die Palette wird somit der Portalgabel übergeben. Der Reststapel wird abgearbeitet und gleichzeitig fährt ein Palettenaufnehmer der Palettennachführvorrichtung nach unten, um eine neue Palette mit vollem Stapel zu übernehmen, so daß diese unterhalb der von der Portalgabel gehaltenen Palette in Position zum Einfahren in den Anleger gebracht werden kann. Ist die alte Palette abgearbeitet, so fährt das Portal aus dem Anleger heraus, wodurch die leere Palette ihre Entnahmeposition verlaßt und von der Bedienperson von der Portalgabel entnommen und abgeführt werden kann. Sobald diese alte Palette den Anleger verlassen hat, wird mittels der Palettennachführvorrichtung der neue Stapel vollends in die Entnahmeposition des Anlegers hochgefahren und -nach einer kurzen Pause von etwa 15 bis 20 Tafeln- der Produktionsprozeß weitergeführt. Das Herausfahren und wieder Hineinfahren des Portals in den Bereich des Anlegers erfordert das Wegschwenken von im Fahrweg befindlichen Führungsblechen. Diese Führungsbleche werden in Arbeitsposition zurückgeschwenkt, sobald sich der neue Stapel in seiner Entnahmeposition befindet.

Der Erfindung liegt die Aufgabe zugrunde, ein Verfahren der eingangs genannten Art anzugeben, das einen sichereren und einfacheren Betrieb ermöglicht.

Diese Aufgabe wird erfindungsgemäß dadurch gelöst, daß während des Handhabungsbetriebszustands durch vertikales Verfahren der Palette eine Reststapelanhebung innerhalb des Höhenniveaubereichs durchgeführt wird, und daß anschließend die leere Palette durch vertikales und horizontales Verfahren zu einem Ablageort transportiert oder transportiert und dort abgesetzt wird. Die Erfindung sieht somit vor, daß während des maschinell erfolgenden Handhabungsbetriebszustands ebenfalls -wie auch im Normalbetriebszustand- eine Palettenanhebung derart erfolgt, daß das oberste Gut des Reststapels stets im definierten Höhenniveaubereich liegt, wodurch es nicht zum Absenken des Anlegeniveaus des Reststapels bis unter ein ungünstiges Niveau kommt, woraus -je nach Blechtafel-Geometrie und -Gewicht- Störungsprobleme resultieren könnten. Diese Probleme stellen sich im Stand der Technik dadurch ein, daß die Portalgabel eine fixe Höhenposition aufweist und daher -durch Abarbeiten des Reststapels- das Anlegeniveau stetig absinkt, so daß es den definierten Höhenniveaubereich unterschreitet. Mithin sieht die Erfindung zwei unabhängig voneinander arbeitende Palettenanhebungsverfahrensschritte vor, nämlich eine derartige Anhebung einerseits im Normalbetriebszustand vorzunehmen, jedoch -erfindungsgemäß- auch im Handhabungsbetriebszustand diese Palettenanhebung weiter fortzuführen, um eine optimale Reststapelabarbeitung zu ermöglichen. Durch diese im Handhabungsbetriebzustand erfolgende Möglichkeit, die Palette vertikal zu verfahren, wird -gemäß der Erfindung- zusätzlich noch die Möglichkeit geschaffen, die leere Palette maschinell einem Ablageort zuzuführen. Neben der vertikalen Verfahrbarkeit -die auch für die Reststapelanhebung verwendet wird- ist auch ein maschinelles horizontales Verfahren der Palette vorgesehen, so daß durch das horizontale Verfahren die Leerpalette aus dem Anleger heraus und durch das vertikale Verfahren zu einem Ablageort transportiert oder transportiert und abgesetzt werden kann. Mithin erfolgt das Abführen der Palette aus ihrer Entnahmeposition automatisch und kann auf diese Art und Weise schneller als bei dem bekannten manuellen Entfernen erfolgen, so daß die im Produktionsprozeß entstehende Lücke auf 10 bis 20 % der manuellen zeit reduziert werden kann. Hierbei ist nochmals zu erwähnen, daß das vertikale Verfahren in Doppelfunktion verwendet wird, nämlich einmal für die Reststapelanhebung und zum anderen zum Entsorgen der Leerpalette.

Durch die Angabe "vertikales und horizontales Verfahren" der leeren Palette im Anspruch 1 ist keine zeitliche Abfolge des Verfahrens der Palette zu verstehen, sondern es können einzelne oder mehrere Verfahrensvorgänge in vertikaler und horizontaler Richtung durchgeführt werden, um die Leerpalette aus ihrer Entnahmeposition zum Ablageort zu transportieren. Es ist daher durchaus denkbar, daß zunächst horizontal, dann vertikal, dann wieder horizontal und dann wieder vertikal verfahren wird oder daß eine andere Abfolge des Verfahrens der Palette erfolgt.

Nach einer Weiterbildung der Erfindung ist vorgesehen, daß während des Handhabungsbetriebszustands unterhalb der den Reststapel aufweisenden Palette eine weitere, mit gestapelten Gütern beladene Palette plaziert wird. Mithin wird die Zeit, während der die Reststapelabarbeitung erfolgt, genutzt, um das Einbringen einer neuen, mit gestapelten Gütern beladenen Palette in eine vorbereitende Position zum Einbringen in den Anleger zu bringen, so daß der nachfolgende Palettenwechsel möglichst schnell durchgeführt werden kann.

Das erfindungsgemäße Verfahren sieht vor, daß im Zuge des Verfahrens der leeren Palette zum Ablageort diese horizontal und anschließend zumindest vertikal verfahren wird. Das horizontale Verfahren dient dazu, die leere Palette aus dem Bereich des Anlegers zu entfernen. Das vertikale Verfahren wird, wie vorstehend schon erläutert, zur Nachfuhrfunktion bei der Abarbeitung des Reststapels und zusätzlich zum Abtransport der leeren Palette verwendet, wobei die vertikale Verfahrbarkeit der Palette zu einem Absetzen derselben am Ablageort notwendig ist.

Es ist vorgesehen, daß das horizontale Verfahren -ausgehend von der Entnahmeposition- in einer Richtung erfolgt, die entgegengesetzt zur Gütertransportrichtung des Weiterverarbeitungsprozesses liegt. Damit ist sichergestellt, daß die leere Palette so aus dem Bereich des Anlegers entfernt wird, daß sie keinen störenden Einfluß auf den Weiterverarbeitungsprozeß ausüben kann.

Nach einer Weiterbildung der Erfindung ist vorgesehen, daß das vertikale Verfahren der leeren Palette nach oben bis in eine Überkopfhöhe erfolgt. Damit ist für das Bedien- oder Wartungspersonal ungehinderter Zugang zum Anleger oder eventuellen Bedienelementen für den Weiterverarbeitungsprozeß ermöglicht, so daß in aufrechtstehender Position einer Person eventuelle Wartungs-, Montage- oder Einstellarbeiten ohne Demontage von behindernden Teilen durchgeführt werden können.

Bei einer bevorzugten Ausgestaltung der Erfindung ist vorgesehen, daß im Zuge des Verfahrens der leeren Palette zum Ablageort diese eine Drehbewegung um eine vertikale Achse um einen bestimmten Winkel, vorzugsweise einen 180°-Winkel, durchführt. Die Drehbewegung um eine vertikale Achse ermöglicht es, die leere Palette zu einem an beliebiger Stelle liegenden Ablageort zu transportieren, so daß dieser beispielsweise neben dem Anleger angeordnet sein kann oder sich entgegengesetzt gegenüberliegend zum Anleger befindet, so daß um einen 180°-Winkel gedreht werden muß. Die Drehbewegung ermöglicht überdies eine kompakte Bauform einer Vorrichtung zur Durchführung des erfindungsgemäßen Verfahrens.

Weiterhin ist erfindungsgemäß vorgesehen, daß im Zuge des Verfahrens der leeren Palette zum Ablageort diese nach dem horizontalen und anschließenden vertikalen Verfahren die Drehbewegung durchführt. Damit ist sichergestellt, daß die leere Palette erst aus der Entnahmeposition -also aus dem Anleger- herausfährt, dann vertikal hochfährt und in hochgefahrener Position die Drehung ausführt, so daß die Drehung keine Kollision zwischen Leerpalette und Anleger oder benachbarten Teilen verursacht.

Das erfindungsgemäße Vorgehen sieht weiterhin vor, daß nach der Drehbewegung die leere Palette durch vertikales gegebenenfalls auch zusätzliches horizontales Verfahren nach unten auf dem Ablageort abgesetzt wird. Bei engen Platzverhältnissen ist es vorteilhaft, die um 180° geschwenkte Leerpalette wieder eine Teilwegstrecke in Richtung zum Anleger zurückzufahren, bevor sie durch vertikales Verfahren nach unten am Ablageort abgesetzt wird. Damit kann sich der Ablageort unmittelbar neben beziehungsweise vor dem Anleger befinden und somit der vorhandene Platz optimal genutzt werden.

Es sei hier angemerkt, daß die vertikale und horizontale Bewegung sowie die Drehbewegung unabhängig voneinander erfolgen können, somit ist es auch denkbar, daß der Bewegungsablauf der leeren Palette aus ihrer Entnahmeposition bis zum Ablageort durch eine andere Kombination aus Vertikal-, Horizontal- und Drehbewegungen erfolgt.

In bevorzugter Ausgestaltung der Erfindung ist vorgesehen, daß sich Normalbetriebszustand und Handhabungsbetriebszustand alternierend wiederholen. Nachdem eine Leerpalette am Ablageort abgesetzt ist, wird durch Zurückfahren in Ausgangsposition eine weitere Palettennachführung und ein Leerpalettenabtransport einer nachfolgenden Palette ermöglicht. Damit ist ein automatischer Palettenwechselprozeß realisierbar, so daß der Weiterverarbeitungsprozeß mit den vorstehend erläuterten, nur sehr kurzen Prozeßunterbrechungen bei der Leerpalettenentnahme ständig fortgesetzt werden kann.

Eine weitere vorteilhafte Ausgestaltung der Erfindung besagt, daß eine leere Palette auf keine oder mindestens eine am Ablageort bereits befindliche Palette abgesetzt wird. Somit können die beim Weiterverarbeitungsprozeß anfallenden Leerpaletten platzsparend aufeinandergestapelt werden, so daß diese beispielsweise von einem Staplerfahrer abtransportiert werden können. Es ist jedoch auch möglich, daß die Leerpaletten auf eine Rollbahn abgesetzt und danach einzeln entsorgt beziehungsweise abgeführt werden oder aber gemeinsam als ein Leerpalettenstapel auf der Rollbahn weggerollt werden, wobei dieser Vorgang auch automatisiert oder zumindest teilautomatisiert oder manuell durchführbar ist.

Die Erfindung betrifft weiterhin eine Vorrichtung zur automatischen Handhabung von Paletten, die der Aufnahme von gestapelten, flächenförmigen Gütern, insbesondere Blechtafeln, dienen, und die mittels einer Vereinzelungs- und Transportvorrichtung einer Weiterverarbeitungsvorrichtung, insbesondere einer Druck- oder Lackiervorrichtung, einzeln vom Stapel entnommen zuführbar sind, mit einer Palettennachführvorrichtung zur Anhebung der Palette, so daß sich während eines Normalbetriebszustands das jeweils oberste Gut für eine Niveauregulierung des Stapels in einem definierten Höhenniveaubereich befindet, und mit einer Palettenhandhabungsvorrichtung zum Abtransport der nach Abarbeitung des Stapels leeren Palette, insbesondere zur Durchführung des vorstehenden Verfahrens.

Die erfindungsgemäße Vorrichtung sieht vor, daß die Palettenhandhabungsvorrichtung einen, die Palette während eines Handhabungsbetriebszustands tragenden und motorisch vertikal verfahrbaren Palettenträger für die Niveauregulierung aufweist, und daß der Palettenträger zusätzlich für das Verfahren der leeren Palette zu einem Ablageort motorisch auch horizontal verfahrbar gelagert ist. Während des Normalbetriebszustands wird die mit dem Stapelgut beladene Palette von unten mittels einer Palettenaufnahme nach oben gefahren und die Tafeln kontinuierlich, beispielsweise von einer Sauggreifereinrichtung, unter Zuhilfenahme beispielsweise einer Tafeltrenneinrichtung, einer Weiterverarbeitungsvorrichtung zugeführt. Die erfindungsgemäße Vorrichtung sieht nun vor, daß die einen Reststapel aufweisende Palette beim Übergang vom Normalbetriebszustand zum Handhabungsbetriebszustand von einer Palettenaufnahme zum Palettenträger übernommen wird, so daß sich die Palette auf dem Palettenträger befindet und die Palettenaufnahme wieder nach unten fahren kann, um eine neue, vollbeladene Palette aufzunehmen. Die erfindungsgemäße Vorrichtung ist so ausgebildet, daß der Palettenträger vertikal verfahrbar gelagert ist. Da der Palettenträger zur Höhenniveauregulierung genutzt wird, also vertikal verfahren werden kann, ist diese vertikale Verfahrbarkeit zusätzlich zum Abtransport der Leerpalette verwendbar. Damit liegt also eine Doppelfunktion des vertikal verfahrbaren Palettenträgers vor; einerseits für die Niveauregulierung und andererseits für den Abtransport der Leerpalette zu einem Ablageort. Um die Leerpalette von dem Anleger -also der Entnahmeposition der Palette- zu dem Ablageort zu transportieren, muß, da die Palette auf dem Palettenträger steht, der Palettenträger zusätzlich noch horizontal verfahrbar gelagert sein, um das Herausfahren aus dem Anleger zu ermöglichen.

Eine Weiterbildung der erfindungsgemäßen Vorrichtung sieht vor, daß die Palettenhandhabungsvorrichtung einen Ständer aufweist, an dem eine Schlitteneinheit vertikal verfahrbar gelagert ist. Der Ständer ist ortsfest am Boden des Aufstellungsorts verankert und vorzugsweise als einseitiger Ständer ausgebildet, das heißt neben einer gedachten Linie zwischen Anleger und Weiterverarbeitungsvorrichtung aufgestellt, so daß der Vorteil des freien Zugangs zum Anleger oder anderen Vorrichtungen bestehen bleibt. Mittels eines Motors ist die Schlitteneinheit vorzugsweise mit zwei Geschwindigkeitsstufen am Ständer vertikal verlagerbar, so daß mittels einer langsamen Geschwindigkeit das Nachfahren der Palette und mittels einer schnellen Geschwindigkeit der Abtransport der leeren Palette erfolgt. Die schnelle Geschwindigkeit ermöglicht es auch, die Schlitteneinheit schnell nach oben zu fahren, um beispielsweise einem Bediener eine rasche Zugänglichkeit zum Anleger zu ermöglichen.

Eine vorteilhafte Weiterbildung der erfindungsgemäßen Vorrichtung sieht vor, daß die Palettenhandhabungsvorrichtung galgenartig aufgebaut ist, wobei der Ständer den einen, senkrechten Schenkel des Galgens und der Palettenträger den anderen, horizontalen Schenkel des Galgens bildet. Wie schon vorstehend erwähnt, kann damit auf das aus dem Stand der Technik bekannte aufwendige Portal verzichtet werden.

Weiterhin ist vorgesehen, daß der Palettenträger mindestens zwei vorzugsweise parallel zueinander beabstandete Gabelzinken aufweist. Die Verwendung der beiden Gabelzinken, im folgenden als Gabel bezeichnet, bieten den Vorteil einer einfachen Leichtbauweise. Vorteilhaft ist es, wenn der Ab-stand der beiden parallelen Gabelzinken einstellbar ist, so daß ihr Abstand der Palettengröße angepaßt werden kann.

Nach einer Weiterbildung der erfindungsgemäßen Vorrichtung ist vorgesehen, daß der Palettenträger um eine vertikale Achse motorisch drehbar und horizontal verfahrbar an der Schlitteneinheit gelagert ist.

Weiter vorteilhafte Ausgestaltungen der Erfindung ergeben sich aus den übrigen, in den Unteransprüchen genannten Merkmalen.

Die Erfindung wird nachfolgend in einem Ausführungsbeispiel anhand der Zeichnungen näher erläutert. Es zeigt
- Figur 1: eine schematische Seitenansicht der Vorrichtung in einer ersten Funktionsstellung,
- Figur 2: eine schematische Seitenansicht der Vorrichtung in einer zweiten Funktionsstellung,
- Figur 3: eine schematische Seitenansicht der Vorrichtung in einer dritten Funktionsstellung,
- Figur 4: eine schematische Seitenansicht der Vorrichtung in einer vierten Funktionsstellung,
- Figur 4.1: eine zweite Ausführungsform der Vorrichtung gemäß Figur 4,
- Figur 5: eine schematische Seitenansicht der Vorrichtung in einer fünften Funktionsstellung,
- Figur 6: eine Frontansicht der Vorrichtung und
- Figur 7: eine Draufsicht auf die Vorrichtung.

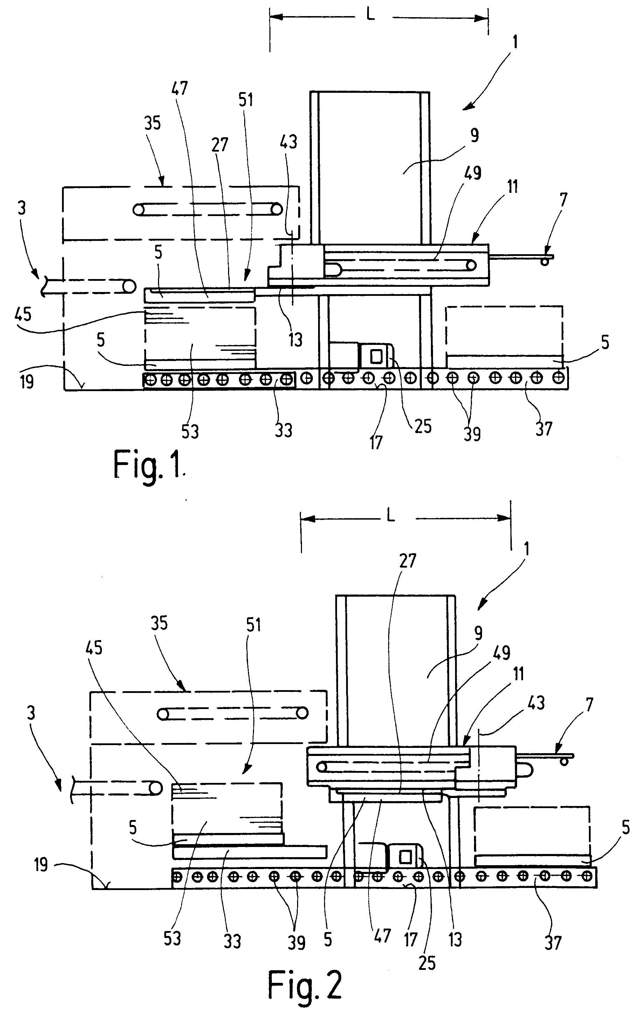

Figur 1 zeigt eine vereinfachte und schematische Seitenansicht einer Palettenhandhabungsvorrichtung 1 zur automatischen Handhabung von Paletten 5. Die Palettenhandhabungsvorrichtung 1 wird zur Zuführung von Blechtafeln 45 zu einer Weiterverarbeitungsvorrichtung 3, beispielsweise einer Druck- oder Lackiervorrichtung, verwendet. Überdies hinaus besteht für die Palettenhandhabungsvorrichtung 1 zusätzlich die Aufgabe, eine abgearbeitete Palette 5 (Leerpalette 47) zu einem Ablageort 7 zu transportieren.

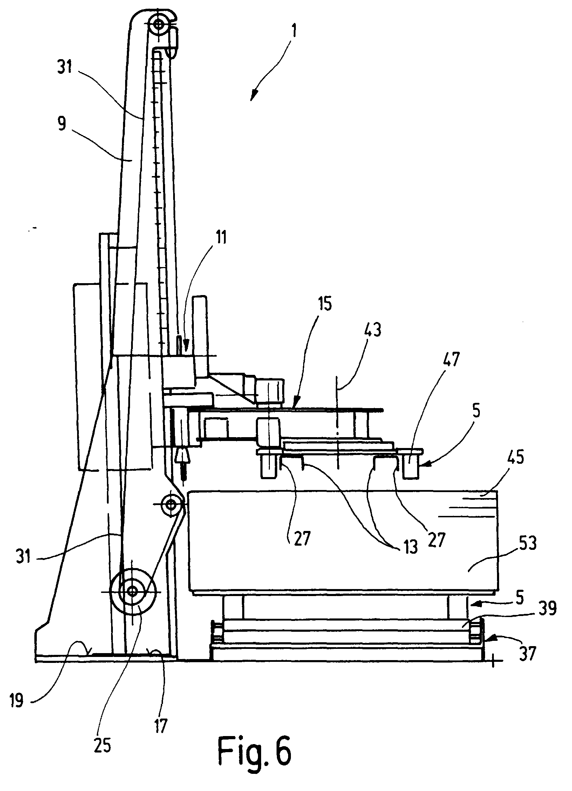

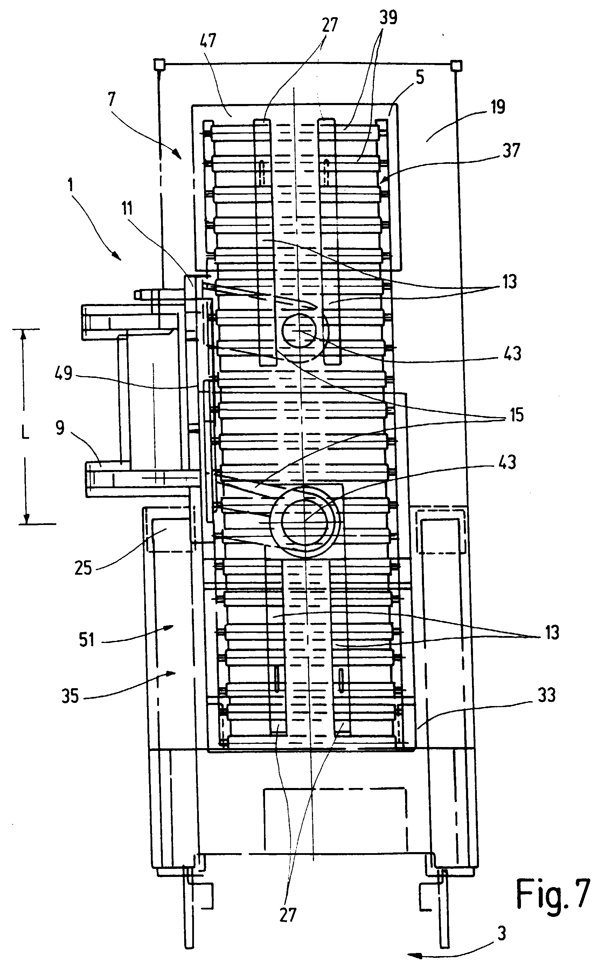

Die Palettenhandhabungsvorrichtung 1 weist im wesentlichen einen Ständer 9, eine Schlitteneinheit 11, einen Palettenträger 13 und einen Zwischenträger 15 (Figur 6 und Figur 7) auf. Der Ständer 9 ist mit einer Stirnseite 17 am Fußboden 19 verankert.

An dem Ständer 9 ist die Schlitteneinheit 11 vertikal verlagerbar angebracht. Die Schlitteneinheit 11 kann parallel zum Fußboden 19 nach unten beziehungsweise nach oben verlagert werden. Wie der Figur 6 zu entnehmen ist, ist die Palettenhandhabungsvorrichtung 1 galgenartig aufgebaut, wobei der Ständer 9 den senkrechten und der Palettenträger 13 den waagerechten Schenkel bildet. Der Antrieb zur horizontalen Verlagerung der Schlitteneinheit 11 ist in Figur 1 durch einen Motor 25 angedeutet. In der Figur 6 ist zu erkennen, daß die Kraftübertragung vom Motor 25 zur Schlitteneinheit 11 durch einen ersten Kettenzug 31 erfolgt. Die Kraftübertragung kann in einer anderen Ausführungsform der Palettenhandhabungsvorrichtung 1 beispielsweise auch durch eine Spindel, Zahnstange oder einem Seilzug zur Schlitteneinheit 11 übertragen werden. Es ist jedoch auch denkbar, daß die Schlitteneinheit 11 pneumatisch oder hydraulisch, beispielsweise durch Teleskopstangen, nach oben oder unten verlagert wird.

An der Schlitteneinheit 11 ist der Zwischenträger 15 horizontal verlagerbar angebracht. Der Zwischenträger 15 ist nur in der Frontansicht (Figur 6) und Draufsicht (Figur 7) zu erkennen. Dieser Zwischenträger 15 wird über einen zweiten Kettenzug 49 von einem in den Figuren nicht zu erkennenden zweiten Motor angetrieben. An dem Zwischenträger 15, der mittels des ersten Kettenzugs 31 über die mit ihm verbundene Schlitteneinheit 11 vertikal und mittels des zweiten Kettenzugs 49 auch horizontal verlagert werden kann, ist der Palettenträger 13 ferner drehbar um eine Hoch- beziehungsweise Drehachse 43 gelagert. Der Palettenträger 13 ist als Gabel 27 ausgebildet. Der zweite Kettenzug 49 ist an der Schlitteneinheit 11 so ausgebildet, daß der Palettenträger 13, also die die Leerpalette 47 tragende Gabel 27, um eine Länge L nach links oder rechts verlagerbar ist.

In Figur 1 ist links vom Ständer 9 eine Palettennachführvorrichtung 33 angeordnet. Diese Palettennachführvorrichtung 33 dient dazu, die abzuarbeitenden Paletten 5 der Weiterverarbeitungsvorrichtung 3 zuzuführen, so daß sich die oberste Blechtafel 45 eines Blechtafelstapels 53 in einem definierten Höhenniveaubereich befindet. Um die Zu- und Nachführung des Blechtafelstapels 53 zu ermöglichen, ist die Palettennachführvorrichtung 33 vertikal verfahrbar.

In den Figuren ist die Weiterverarbeitungsvorrichtung 3 nur grob schematisch dargestellt. Sie ist als Anleger 35 ausgebildet und befindet sich links vom Ständer 9.

Die in Figur 1 dargestellte schematische Seitenansicht zeigt eine auf dem Fußboden 19 liegende Rollbahn 37 mit senkrecht zur Rollbahnlängsrichtung beabstandet liegenden Rollen 39. Die Rollbahn 37 dient zur Anlieferung neuer, beladener Paletten 5. In den Seitenansichten der Figuren 1 bis 5 ist erkennbar, daß der Ablageort 7 rechts vom Ständer 9 oberhalb der Rollbahn 37 liegt. Befinden sich mehrere Leerpaletten 47 auf dem Ablageort 7, so können diese beispielsweise durch einen Stapelfahrer gemeinsam entnommen und abtransportiert werden. Der Ablageort 7 kann sich jedoch nach einer anderen Ausführungsform rechts vom Ständer 9 direkt auf der Rollbahn 37 befinden, so daß die Zulieferung einer neuen beladenen Palette 5 und zusätzlich auch der Abtransport der Leerpalette 47 mittels der Rollbahn 37 erfolgen.

In der in Figur 1 dargestellten Seitenansicht der Palettenhandhabungsvorrichtung 1 befindet sich diese in einer ersten Funktionsstellung. Diese erste Funktionsstellung ist der Zeitpunkt, zu dem die Nachführung der Palette 5 mittels der Palettennachführungsvorrichtung 33 zur Reststapelabarbeitung beendet ist, und der Abtransport der nun leeren, sich in Entnahmeposition 51 befindlichen Palette 47 beginnt. Hierzu wird der Palettenträger 13 in Richtung zur Weiterverarbeitungsvorrichtung 3 und damit in die Leerpalette 47 eingefahren.

Figur 2 zeigt eine schematische Seitenansicht der erfindungsgemäßen Vorrichtung in einer zweiten Funktionsstellung. In Fortführung der Funktion gemäß Figur 1, in der der Palettenträger 13, beziehungsweise die Gabel 27, bis zu einem Anschlag ganz nach links zum Anleger 35 hin ausgefahren ist, ist in Figur 2 der Palettenträger 13 mitsamt der Leerpalette 47 bis zu einem rechten Anschlag nach rechts gefahren. Damit ist die Leerpalette 47 aus dem Bereich des Anlegers 35 entfernt, so daß eine neue vollständig bestückte Palette 5 zur Abarbeitung mittels der Rollbahn 37 und der nach oben verfahrbaren Palettennachführvorrichtung 33 zur Verfügung steht. Damit können die auf der Palette 5 gestapelten Blechtafeln 45 sukzessive dem Weiterverarbeitungsprozeß zugeführt werden, wobei auch hier die Palettennachführvorrichtung 33 dafür Sorge trägt, daß die jeweils oben auf dem Stapel 53 befindliche Blechtafel 45 in einem definierten Höhenniveaubereich liegt.

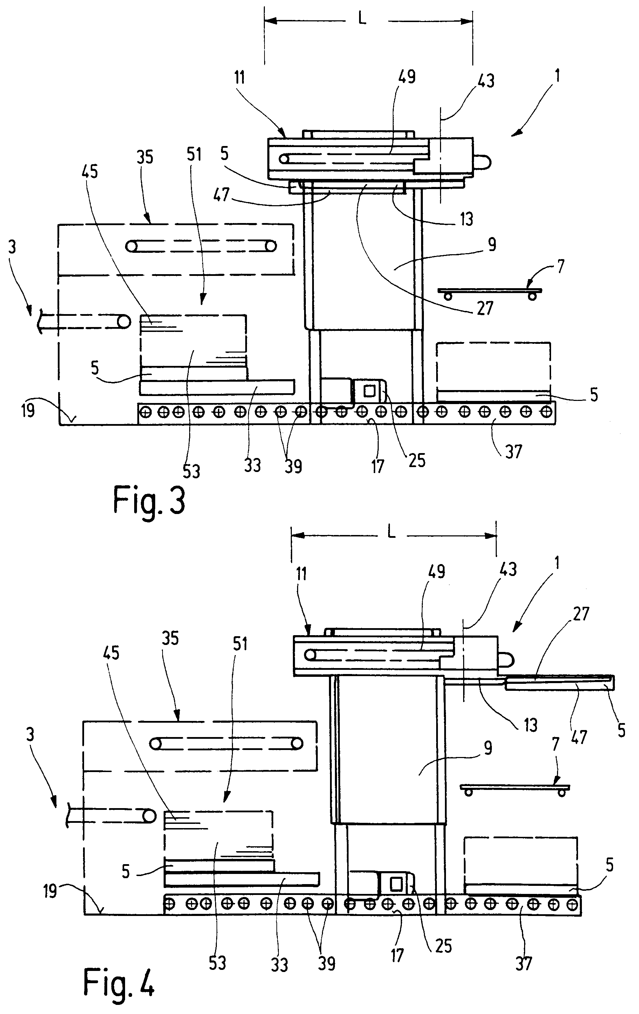

Während des Abarbeitens der Palette 5 wird mittels der Palettenhandhabungsvorrichtung 1 die Leerpalette 47 zu dem Ablageort 7 verbracht. Nach dem erwähnten horizontalen Verfahren der Leerpalette 47 -wie in Figur 2 gezeigt- wird als nächster Schritt der Palettenträger 13 mitsamt seiner auf ihm befindlichen Leerpalette 47 mittels der Schlitteneinheit 11 am Ständer 9 vertikal bis auf eine Überkopfhöhe verfahren, so daß die dritte Funktionsstellung, wie in Figur 3 gezeigt, erreicht wird.

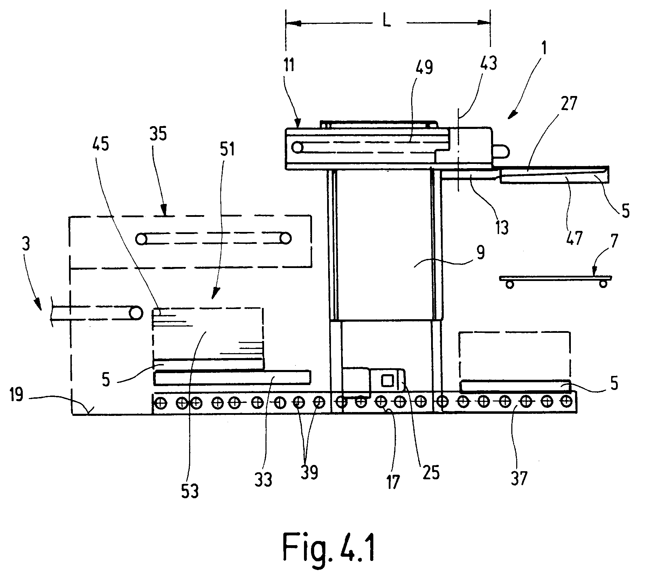

Die Darstellung in Figur 4 zeigt die Palettenhandhabungsvorrichtung 1 in einer nachfolgenden vierten Funktionsstellung. Nachdem die Schlitteneinheit 11 am Ständer 9 nach oben gefahren ist, wird nun der Palettenträger 13, der gegenüber der Schlitteneinheit 11 drehbeweglich gelagert ist, um die Drehachse 43 um einen Winkel von 180° in Richtung auf den Ablageort 7 gedreht. Die vertikale Drehachse 43 befindet sich, wie in Figur 7 gut zu erkennen ist, an einem Ende des Palettenträgers 13, so daß nach einer 180° Drehung die Gabel 27 und somit die Leerpalette 47 quasi eine horizontale Verlagerung hin zum Ablageort 7 erfährt.

Die Figur 4.1 zeigt eine zweite Ausführungsform der Palettenhandhabungsvorrichtung 1 in der Funktionsstellung gemäß der Figur 4. Es wird im folgenden nur auf den Unterschied zur ersten Ausführungsform eingegangen. Nach der zweiten Ausführungsform der Palettenhandhabungsvorrichtung 1 ist der Ablageort 7 weiter -im Gegensatz zu Figur 4- vom Ständer 9 entfernt angebracht, so daß sich die Gabel 27 und damit auch die Leerpalette 47 nach der 180°-Drehung der Gabel 27 direkt über dem Ablageort 7 befindet.

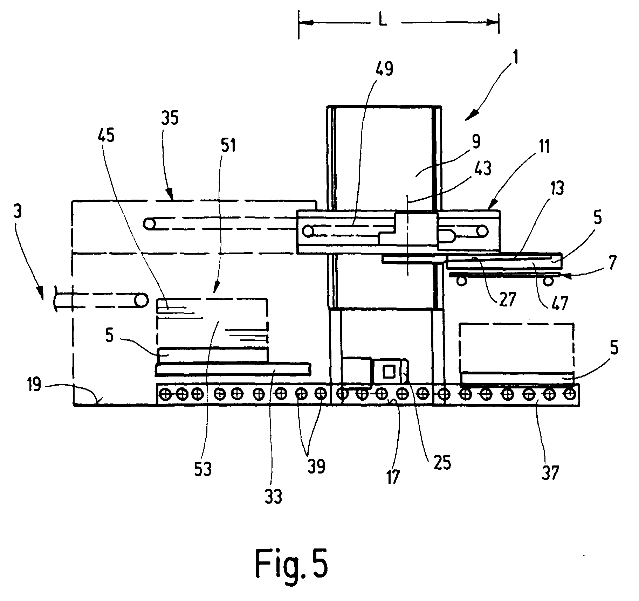

Im weiteren Ablauf wird nun, wie Figur 5 zeigt, die Schlitteneinheit 11 wieder nach unten gefahren, also in Richtung auf den Ablageort 7, wobei gleichzeitig der Palettenträger 13 mitsamt der Leerpalette 47 wieder in Richtung Anleger 35 horizontal verlagert wird. Diese horizontale Verlagerung erfolgt nicht bis zum linken Anschlag, sondern ist etwa in der Mitte der Schlittenlänge L der Schlitteneinheit 11 endet. Damit befindet sich nun die Leerpalette 47 direkt über dem Ablageort 7, so daß durch weiteres Absenken der Schlitteneinheit 11 die Leerpalette 5 am Ablageort 7 abgesetzt wird. Die horizontale Verlagerung bis in etwa der Mitte der Schlittenlänge L ist im Falle der zweiten Ausführungsform gemäß Figur 4.1 nicht notwendig, da sich die Leerpalette 47 nach der Drehbewegung direkt über dem Ablageort 7 befindet und damit nur durch ein Absenken der Gabel 27 die Leerpalette 47 auf dem Ablageort 7 zu liegen kommt. Durch ein horizontales Verlagern der Gabeln 27 in Richtung hin zum Anleger 35 wird der Palettenträger 13 aus der Leerpalette 47 herausgefahren. Ausgehend von dieser Situation wird dann der Palettenträger 13 wieder in seine Ausgangsposition zurückgefahren, also durch Drehung, horizontales und vertikales Verfahren der Schlitteneinheit 11, zurückgeführt.

Während dieses Abtransports der Leerpalette 5 wird -wie erwähnt- von der Weiterverarbeitungsvorrichtung 3 der Stapel der neuen Palette 5 abgearbeitet. Diese Abarbeitung erfolgt bis zu einer definierten Reststapelgröße. Ist diese Reststapelgröße erreicht, so übernimmt der zurückgeführte Palettenträger 13 die Palette 5, so daß sich der vorstehende Zyklus wiederholt.

Figur 6 zeigt eine Frontansicht der erfindungsgemäßen Plattenhandhabungsvorrichtung 1, wobei hier gut zu erkennen ist, daß der Ständer 9 seitlich von der Rollbahn 37 beziehungsweise seitlich vom Anleger 35 angeordnet ist, so daß im wesentlichen ein freier Zugang zum Anleger 35 besteht.

Die Figur 7 zeigt die erfindungsgemäße Vorrichtung in einer Draufsicht, wobei hier der Palettenträger 13, also die Gabel 27, in zwei verschiedenen Positionen beziehungsweise Funktionsstellungen dargestellt ist. Der Palettenträger 13 ist in seiner Ausgangsstellung, also über dem Anleger 35 in der unteren Zeichnungshälfte der Figur 7 und in Ablageposition hin zum Ablageort 7 in der oberen Zeichnungshälfte dargestellt. Hier ist ferner gut zu erkennen, daß sich der Palettenträger 13 in dem Bereich der Länge L horizontal verlagern und um die Drehachse 43 um einen Winkel von 180° drehen läßt.

Es sei hier noch angemerkt, daß zur Steuerung des vorstehend erläuterten Verfahrens die Palettenhandhabungsvorrichtung 1 Steuerungselemente und Sensoren aufweist, die jedoch aus Gründen der Übersichtlichkeit nicht in den Figuren dargestellt sind. Die Sensoren dienen zur Begrenzung der horizontalen und vertikalen Verfahrbarkeit des Palettenträgers 13 beziehungsweise der Schlitteneinheit 11 sowie zur Niveauregulierung und können sowohl als berührungslose als auch als berührungsbehaftete Sensoren ausgebildet sein.

Es ist auch denkbar, daß die Palettenhandhabungsvorrichtung 1 nicht wie vorstehend erläutert als galgenartige Konstruktion ausgebildet ist, sondern als Portal. Bei einem Portal dienen mindestens zwei Ständer einem Palettenträger, der quasi eine Brücke zwischen den beiden Ständern bildet, die Horizontal-, Vertikal- und Drehbewegung zu ermöglichen. Damit ergibt sich eine Ausführungsform der Palettenhandhabungsvorrichtung 1, die in U- beziehungsweise Tor-förmiger Gestalt über der Rollbahn ausgebildet ist.

## Patentansprüche

1. Verfahren zum automatischen Handhaben von Paletten, die der Aufnahme von gestapelten, flächenförmigen Gütern, insbesondere Blechtafeln, dienen, wobei -in einem Normalbetriebszustand- das jeweils oberste Gut vom Stapel entnommen und einem Weiterverarbeitungsprozeß, insbesondere einem Druck- oder Lackierprozeß, zugeführt wird und eine Palettenanhebung im Normalbetriebszustand derart erfolgt, daß sich das jeweils oberste Gut innerhalb eines definierten Höhenniveaubereichs befindet, und wobei -in einem Handhabungsbetriebszustand- ein auf der Palette befindlicher Reststapel der Güter dem Weiterverarbeitungsprozeß zugeführt und anschließend die nach Abarbeiten des Reststapels leere Palette aus ihrer Entnahmeposition entfernt wird, **dadurch gekennzeichnet**, daß während des Handhabungsbetriebszustands durch vertikales Verfahren der Palette (5) eine Reststapelanhebung innerhalb des Höhenniveaubereichs durchgeführt wird, und daß anschließend die leere Palette (47) durch vertikales und horizontales Verfahren zu einem Ablageort (7) transportiert oder transportiert und dort abgesetzt wird.

2. Verfahren nach Anspruch 1, **dadurch gekennzeichnet**, daß während des Handhabungsbetriebszustands unterhalb der den Reststapel aufweisenden Palette (5) eine weitere, mit gestapelten Gütern beladene Palette (5) plaziert wird.

3. Verfahren nach einem der vorhergehenden Ansprüche, **dadurch gekennzeichnet**, daß im Zuge des Verfahrens der leeren Palette (47) zum Ablageort (7) diese horizontal und anschließend zumindest vertikal verfahren wird.

4. Verfahren nach Anspruch 3, **dadurch gekennzeichnet**, daß das horizontale Verfahren -ausgehend von der Entnahmeposition (51)- in einer Richtung erfolgt, die entgegengesetzt zur Gütertransportrichtung des Weiterverarbeitungsprozesses liegt.

5. Verfahren nach einem der vorhergehenden Ansprüche, **dadurch gekennzeichnet**, daß das vertikale Verfahren der leeren Palette (47) nach oben bis in eine Überkopfhöhe erfolgt.

6. Verfahren nach einem der vorhergehenden Ansprüche, **dadurch gekennzeichnet,** daß im Zuge des Verfahrens der leeren Palette (47) zum Ablageort (7) diese eine Drehbewegung um eine vertikale Achse (43) um einen bestimmten Winkel, vorzugsweise einen 180°-Winkel, durchführt.

7. Verfahren nach einem der vorhergehenden Ansprüche, **dadurch gekennzeichnet**, daß im Zuge des Verfahrens der leeren Palette (47) zum Ablageort (7) diese nach dem horizontalen und anschließenden vertikalen Verfahren die Drehbewegung durchführt.

8. Verfahren nach einem der vorhergehenden Ansprüche, **dadurch gekennzeichnet,** daß nach der Drehbewegung die leere Palette (47) durch vertikales gegebenenfalls auch zusätzliches horizontales Verfahren nach unten auf dem Ablageort (7) abgesetzt wird.

9. Verfahren nach Anspruch 8, **dadurch gekennzeichnet**, daß das horizontale Verfahren unter Verkleinerung des Abstands zur Entnahmeposition (51) erfolgt.

10. Verfahren nach einem der vorhergehenden Ansprüche, **dadurch gekennzeichnet,** daß sich Normalbetriebszustand und Handhabungsbetriebszustand alternierend wiederholen.

11. Verfahren nach einem der vorhergehenden Ansprüche, **dadurch gekennzeichnet,** daß eine leere Palette (47) auf keine oder mindestens eine am Ablageort (7) bereits befindliche Palette (47) abgesetzt wird.

12. Verfahren nach einem der vorhergehenden Ansprüche, **dadurch gekennzeichnet,** daß der Ablageort (7) neben der Entnahmeposition (51) liegt.

13. Vorrichtung zur automatischen Handhabung von Paletten, die der Aufnahme von gestapelten, flächenförmigen Gütern, insbesondere Blechtafeln, dienen und die mittels einer Vereinzelungs- und Transportvorrichtung einer Weiterverarbeitungsvorrichtung, insbesondere einer Druck- oder Lackiervorrichtung, einzeln vom Stapel entnommen zuführbar sind, mit einer Palettennachführvorrichtung zur Anhebung der Palette, so daß sich während eines Normalbetriebszustands das jeweils oberste Gut für eine Niveauregulierung des Stapels in einem definierten Höhenniveaubereich befindet und mit einer Palettenhandhabungsvorrichtung zum Abtransport der nach Abarbeitung des Stapels leeren Palette, insbesondere zur Durchführung des Verfahrens nach einem oder mehreren der Ansprüche 1 bis 12, **dadurch gekennzeichnet**, daß die Palettenhandhabungsvorrichtung (1) einen, die Palette (5) während eines Handhabungsbetriebszustands tragenden und motorisch vertikal verfahrbaren Palettenträger (13) für die Niveauregulierung aufweist, und daß der Palettenträger (13) zusätzlich für das Verfahren der leeren Palette (5) zu einem Ablageort (7) motorisch auch horizontal verfahrbar gelagert ist.

14. Vorrichtung nach Anspruch 13, **dadurch gekennzeichnet,** daß die Palettenhandhabungsvorrichtung (1) einen Ständer (9) aufweist, an dem eine Schlitteneinheit (11) vertikal verfahrbar gelagert ist.

15. Vorrichtung nach einem der vorhergehenden Ansprüche, **dadurch gekennzeichnet**, daß die Palettenhandhabungsvorrichtung (1) galgenartig aufgebaut ist, wobei der Ständer (9) den einen, senkrechten Schenkel des Galgens und der Palettenträger (13) den anderen, horizontalen Schenkel des Galgens bildet.

16. Vorrichtung nach einem der vorhergehenden Ansprüche, **dadurch gekennzeichnet,** daß der Palettenträger (13) mindestens zwei vorzugsweise parallel zueinander beabstandete Gabelzinken aufweist.

17. Vorrichtung nach einem der vorhergehenden Ansprüche, **dadurch gekennzeichnet**, daß der Palettenträger (13) um eine vertikale Achse (43) motorisch drehbar gelagert ist.

18. Vorrichtung nach einem der vorhergehenden Ansprüche, **dadurch gekennzeichnet,** daß der Palettenträger (13) horizontal verfahrbar an der Schlitteneinheit (11) gelagert ist.

19. Vorrichtung nach einem der vorhergehenden Ansprüche, **dadurch gekennzeichnet,** daß der Palettenträger (13) drehbar an der Schlitteneinheit (11) gelagert ist.

20. Vorrichtung nach einem der vorhergehenden Ansprüche, **dadurch gekennzeichnet,** daß der Palettenträger (13) drehbar/schwenkbar an einem Zwischenträger (15) gelagert ist und daß der Zwischenträger (15) horizontal verfahrbar an der Schlitteneinheit (11) geführt ist.

21. Vorrichtung nach einem der vorhergehenden Ansprüche, **dadurch gekennzeichnet**, daß der Palettenträger (13) horizontal verfahrbar an einem Zwischenträger (15) geführt ist und daß der Zwischenträger (15) drehbar/schwenkbar an der Schlitteneinheit (11) gelagert ist.
